# FASCICULE DE BREVET EUROPEEN

(11) **EP 0 322 285 B1**
(45) Date de publication et mention de la délivrance du brevet: **24.02.1993**
(21) Numéro de dépôt: 88403199.8
(22) Date de dépôt: 15.12.1988
(51) Int. Cl.: B29C 45/14, B29C 45/17

(54) **Procédé de surmoulage de feuilles non rigides par injection de matières thermoplastiques pour réaliser des pièces composites**
Verfahren zum Beschichten von nichtsteifen Folien durch Spritzgiessen von thermoplastischen Kunststoffen zum Herstellen von zusammengesetzten Teilen
Method for coating non-rigid foils by injection of thermoplastic materials for making composite parts

(30) Priorité: 15.12.1987 FR 8717481
(43) Date de publication de la demande: 28.06.1989
(73) Titulaire: COMPAGNIE PLASTIC OMNIUM Société Anonyme dite:, 69007 Lyon (FR)
(72) Inventeur: Barne, Bruno, F-52200 Langres (FR); Poisat, Michel, F-52200 Langres (FR)
(74) Mandataire: Nony, Michel

(56) Documents cités:
- CH-A- 423 115
- DE-A- 1 813 915
- DE-A- 2 944 797
- DE-A- 3 145 808
- FR-A- 1 161 627
- FR-A- 1 234 237
- FR-A- 1 354 359
- FR-A- 1 492 060
- FR-A- 2 256 021
- FR-A- 2 297 707
- GB-A- 884 468
- GB-A- 2 139 548
- PATENT ABSTRACTS OF JAPAN, vol. 12, no. 87 (M-678)[2934], 19 mars 1988, page 115 M 678; & JP-A-62 227 613 (NISSHA PRINTING CO., LTD) 06-10-1987

## Description

La présente invention a pour objet un nouveau procédé pour réaliser le surmoulage de feuilles non rigides pour la fabrication de pièces composites par injection de matériaux thermoplastiques.

La présente invention a pour objet de permettre le surmoulage de feuilles telles que des feuilles textiles tissées, non tissées ou tricotées, ou encore des feuilles ou films de matière plastique qui ont par exemple reçu préalablement un décor par impression ou par calandrage de manière à ce que lesdites feuilles constituent au moins une partie de la surface de l'objet moulé par injection de matière thermoplastique.

On sait d'après le document DE-A-3 145 808 réaliser de tels surmoulages à condition que les pièces recevant les revêtements sous forme de feuilles présentent une épaisseur relativement importante, par exemple d'au moins environ 6mm, ce qui présente l'inconvénient de nécessiter une masse importante de matière thermoplastique et de rallonger sensiblement le temps de moulage en conduisant ainsi à une forte augmentation du prix des pièces composites ainsi obtenues.

De plus, compte tenu de l'épaisseur importante de leurs parois, les pièces composites ainsi obtenues donnent en général lieu à des déformations et à des retassures qui altèrent souvent leur aspect.

Lorsque l'on désire utiliser ce procédé connu pour des pièces composites relativement minces, c'est-à-dire dont la paroi est inférieure à environ 3mm, on s'aperçoit que, lors de l'injection, la matière thermoplastique qui se répartie dans le moule déplace la feuille que l'on désire surmouler ou encore provoque généralement des étirements, des déchirements ou des froissements de cette dernière, ce qui rend le procédé inutilisable dans la pratique.

"Il est également connu d'après le document FR-A-2 256 021 de réaliser des pièces en matière thermoplastique en injectant tout d'abord dans le moule une quantité de matière plastique insuffisante pour le remplir et en y injectant ensuite un fluide sous pression."

La présente invention est relative à un procédé qui permet d'éliminer ces inconvénients et qui permet de réaliser des surmoulages sur des épaisseurs de matière thermoplastique pratiquement aussi faibles qu'on le désire.

De surcroît, le procédé selon l'invention présente l'avantage, en particulier lorsque la feuille surmoulée est une feuille textile, de ne pas écraser ladite feuille de manière irréversible lors de l'injection de la matière thermoplastique, ce qui conserve à la feuille un touché beaucoup plus agréable.

Il en est de même lorsque la feuille est constituée par au moins une couche de matériau en forme de mousse cellulaire souple qui conserve une certaine élasticité grâce aux faibles pressions qui sont exercées lors de l'injection de la matière plastique en donnant ainsi à la pièce composite obtenue un touché beaucoup plus moelleux.

La présente invention a pour objet un nouveau procédé de surmoulage de feuilles non rigides, pour réaliser des pièces composites par injection d'une matière thermoplastique, caractérisé par le fait que l'on place la feuille dans le moule; que l'on injecte une quantité de matière thermoplastique qui est insuffisante pour remplir la totalité de la cavité du moule, mais qui est suffisante pour recouvrir l'ensemble de la surface interne du moule d'une couche de l'épaisseur désirée; que l'on injecte simultanément ou successivement dans la matière thermoplastique encore au moins partiellement en fusion un gaz sous pression qui la refoule sur toute la surface du moule en créant au moins une cavité remplie dudit gaz; que l'on refroidit le moule pour amener la matière thermoplastique à l'état solide; que l'on déconnecte l'intérieur du moule de la source de gaz sous pression; et que l'on ouvre le moule pour en libérer la pièce composite obtenue.

Conformément à l'invention, la feuille sur laquelle on réalise le surmoulage peut être de nature quelconque. Elle peut être constituée par exemple par une feuille textile obtenue par tissage ou tricotage ou encore une feuille de textile non tissée, éventuellement doublée d'une couche de mousse souple.

Elle peut être constituée par une feuille ou un film en matière synthétique tel qu'un film en matière plastique extrudée ou calandrée ou une feuille de matière plastique comportant une couche de mousse.

La feuille utilisée selon l'invention peut être également complexe, en étant par exemple constituée par la superposition de plusieurs couches différentes, soit sur toute sa surface, soit sur certaines parties de celle-ci de manière à réaliser des décors.

La feuille utilisée selon l'invention peut être décorée par exemple par impression préalable.

Elle peut être également constituée par un matériau naturel tel que du cuir.

Elle peut être pincée sur sa périphérie en deux parties du moule, la matière thermoplastique étant injectée d'un côté de la feuille.

Il est également possible de réaliser selon l'invention une pièce revêtue d'une feuille sur la totalité de sa surface en pinçant deux feuilles entre deux parties du moule et en injectant la matière thermoplastique entre ces deux feuilles.

Conformément à l'invention il est également possible d'utiliser des feuilles qui ne concernent que des parties déterminées de la pièce composite et qui sont de préférence préalablement mises en forme et sont placées aux endroits convenables dans le moule avant l'injection.

Pour éviter que ces éléments de feuilles ne se déplacent lors de l'injection de la matière thermoplastique, il suffit par exemple de les placer dans de légères cavités réalisées dans l'épaisseur du moule ou encore de les maintenir contre la paroi du moule par de légers picots solidaires du moule qui s'engagent dans l'épaisseur de la feuille.

On peut encore maintenir en place les éléments de feuille à l'aide d'un dispositif à succion qui les applique contre la paroi du moule.

Conformément au procédé selon l'invention, le volume occupé par le gaz comprimé qui crée les cavités à l'intérieur de l'objet composite n'a pas besoin de se trouver au droit des feuilles sur lesquelles on effectue le surmoulage conformément à l'invention.

En effet, ces cavités ont pour rôle principal de constituer dans un premier temps une réserve de matière thermoplastique à l'état fondu, puis lorsque l'on injecte le gaz sous pression, de permettre une circulation facile de cette matière de manière à ce qu'elle occupe la totalité de la surface du moule.

Il en résulte que la matière thermoplastique circule à l'intérieur du moule avec une pression relativement faible et qu'ainsi elle ne déplace pas et ne déforme pas les feuilles qui ont été préalablement placées dans le moule.

De surcroît, l'utilisation d'un gaz comprimé pour terminer le processus d'injection de la matière thermoplastique permet de réduire fortement la pression d'injection, ce qui a l'avantage d'éviter d'écraser et de déformer d'une manière irréversible les feuilles qui subissent le surmoulage. On peut ainsi utiliser des feuilles de textile souple tel que du velours ou de la moquette dont l'apparence et la structure ne sont pas sensiblement modifiées par la mise en oeuvre du procédé.

De même, on peut réaliser le surmoulage de feuilles comportant des mousses de matière synthétique revêtues par exemple d'une peau conférant l'aspect du cuir, sans que, lors de l'injection, la feuille de mousse se trouve aplatie de manière irréversible comme cela était la cas avec les procédés connus jusqu'à ce jour.

La présente invention a également pour objet une pièce composite obtenue par surmoulage d'au moins une feuille non rigide par injection d'une matière thermoplastique, caractérisée par le fait qu'elle comporte au moins une cavité réalisée par un gaz injecté sous pression lors de la dernière étape du processus d'injection de la matière thermoplastique.

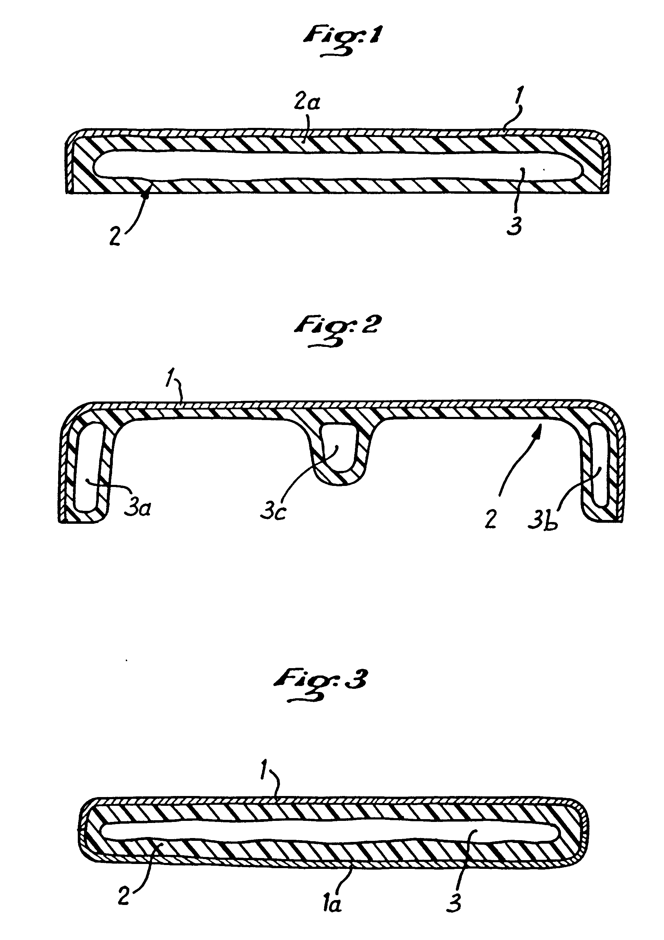

Dans le but de mieux faire comprendre l'invention on va en décrire maintenant à titre d'illustration et sans aucun caractère limitatif, plusieurs modes de réalisation représentés sur le dessin annexé dont les figures 1 à 5 sont des vues en coupe de diverses pièces composites obtenues par le procédé selon l'invention.

La figure 1 est une vue en coupe d'une pièce plate qui comporte une feuille telle que par exemple une feuille de tissu 1 appliquée sur trois côtés d'une pièce en matière thermoplastique 2 qui présente sur toute sa section une cavité 3 qui a été réalisée par le gaz injecté sous pression après l'injection de la matière thermoplastique.

On obtient ainsi une pièce allégée dont la paroi 2a qui supporte la feuille 1 a une épaisseur relativement faible qui peut être par exemple de 0,5 à 2 mm.

On a représenté sur la figure 2 la section d'une pièce composite également revêtue d'une feuille déformable 1 sur trois de ses côtés, qui a été réalisée dans un moule comportant trois cavités longitudinales à l'intérieur desquelles se sont réalisés les volumes creux 3a,3b et 3c qui ont été obtenus par l'injection du gaz sous pression.

Dans les exemples représentés sur les figures 1 et 2, la feuille 1 peut être placée dans le moule en pinçant sa périphérie entre les deux parties du moule, la matière thermoplastique étant introduite dans un endroit non représenté mais située en-dessous de la feuille 1, comme vu sur les figures 1 et 2.

Dans une variante, la matière thermoplastique peut être injectée à travers une ouverture réalisée dans la feuille.

D'une manière générale, le gaz comprimé qui est injecté en même temps ou après la matière thermoplastique peut l'être, soit par une canalisation située à l'intérieur de la buse d'injection de la matière thermoplastique, soit à l'aide d'une aiguille, disposée en un endroit approprié du moule, qui pénètre à l'intérieur de la matière thermoplastique de préférence dans une cavité suffisamment volumineuse pour que celle-ci constitue naturellement le volume creux qui est obtenu par le procédé selon l'invention.

On a représenté sur la figure 3 une variante de la figure 1 dans laquelle la totalité du pourtour de la pièce composite est enveloppée d'une feuille textile.

On a pour cela pincé les deux feuilles textiles 1 et 1a entre les deux parties du moule et l'on a injecté la matière thermoplastique 2 de manière à ce qu'elle pénètre entre les deux feuilles 1 et 1a après quoi l'injection de gaz comprimé a permis la réalisation de la cavité 3.

On a représenté sur la figure 4 comment l'on peut obtenir conformément à l'invention une pièce dont la section est relativement compliquée, et dont une partie seulement de la surface est revêtue d'une feuille 4 selon l'invention.

Pour cela, la feuille 4 est préalablement découpée et préformée de manière à ce que sa forme corresponde à celle de la cavité de la partie supérieure non représentée du moule qui est destinée à la recevoir.

Un tel préformage n'est toutefois pas nécessaire dans tous les cas.

De cette manière, lors du moulage, la feuille 5 se trouve maintenue dans la cavité du moule et grâce au procédé selon l'invention, elle y reste parfaitement positionnée, bien que la paroi 2 présente une épaisseur aussi faible que 0,5 à 2 mm.

Comme on peut le voir sur la figure 4, les cavités 3d et 3e se situent en-dehors de la zone qui est recouverte de la feuille 4 conformément à l'invention.

Il est clair que, conformément à l'invention, la feuille 4, lorsqu'elle n'occupe qu'une partie du moule, peut être maintenue en place par divers moyens autres que celui qui vient d'être décrit et qui consiste à la placer dans une légère cavité du moule.

Il est possible par exemple de réaliser sur la paroi du moule de légers picots qui assurent le maintien de la feuille pendant l'injection.

Il est également possible de maintenir la feuille sur le moule par un léger adhésif qui est suffisant pour que la feuille ne se déplace pas lors de l'injection mais qui permet son décollement ultérieur.

De même, il est aussi possible, notamment lorsque la feuille constitue une barrière suffisamment étanche, de réaliser dans la paroi du moule, aux endroits où l'on doit placer une feuille de petits orifices à travers lesquels on exerce en permanence une succion qui maintient en place la feuille pendant l'injection de la matière thermoplastique.

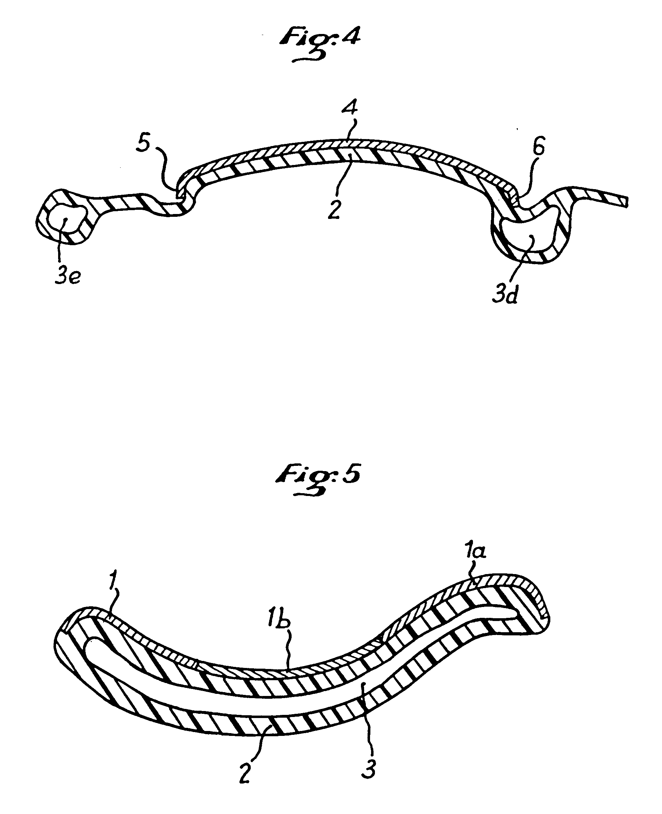

Enfin, on a schématiquement représenté sur la figure 5, comment une pièce de forme ondulée peut recevoir conformément à l'invention une feuille qui est elle-même constituée par un assemblage de trois éléments de feuille 1, 1a, et 1b de manière à constituer un décor particulier.

On voit que le procédé selon l'invention est d'une très grande souplesse pour effectuer le surmoulage avec de la matière thermoplastique d'éléments se présentant sous forme de feuilles et qui, en raison de leur fragilité ou de leur manque de rigidité, ne pouvaient être surmoulés par les procédés connus antérieurement à l'invention.

## Revendications

1. Procédé de surmoulage de feuilles non rigides placées dans un moule par injection d'une matière thermoplastique pour réaliser des pièces composites, caractérisé par le fait qu'après avoir placé la feuille (1,1a,1b,4) dans le moule, l'on injecte une quantité de matière thermoplastique (2) qui est insuffisante pour remplir la totalité de la cavité du moule mais qui est suffisante pour recouvrir l'ensemble de la surface interne du moule d'une couche de l'épaisseur désirée ; que l'on injecte simultanément ou successivement dans la matière thermoplastique, encore au moins partiellement en fusion, un gaz sous pression qui la refoule sur toute la surface du moule en créant au moins une cavité (3,3a,3b,3c,3d,3e) remplie dudit gaz ; que l'on refroidit le moule pour amener la matière thermoplastique à l'état solide ; que l'on déconnecte l'intérieur du moule de la source de gaz sous pression ; et que l'on ouvre le moule pour libérer la pièce composite ainsi obtenue.

2. Procédé selon la revendication 1, caractérisé par le fait que la feuille (1) est constituée par une feuille obtenue par tissage ou tricotage, ou une feuille de textile non tissée, éventuellement doublée d'une couche de mousse souple.

3. Procédé selon la revendication 1, caractérisé par le fait que la feuille est constituée par un film en matière synthétique tel qu'un film en matière plastique extrudé ou calandré ou une feuille de matière plastique comportant une couche de mousse souple.

4. Procédé selon la revendication 1, caractérisé par le fait que la feuille est constituée par un matériau naturel tel que du cuir.

5. Procédé selon l'une quelconque des revendications 1 à 4, caractérisé par le fait que la feuille a été préalablement décorée, par exemple par impression.

6. Procédé selon l'une quelconque des revendications précédentes, caractérisé par le fait que la feuille est constituée par la superposition de plusieurs couches différentes, soit sur toute sa surface, soit sur certaines parties de celle-ci.

7. Procédé selon l'une quelconque des revendications précédentes, caractérisé par le fait que la feuille est pincée sur sa périphérie entre deux parties constituant le moule, la matière thermoplastique étant injectée d'un côté de la feuille.

8. Procédé selon l'une quelconque des revendications 1 à 6, caractérisé par le fait que deux feuilles (1,1a) sont pincées entre deux parties du moule et que l'on injecte la matière thermoplastique entre ces deux feuilles pour obtenir une pièce revêtue des feuilles sur toute sa surface.

9. Procédé selon l'une quelconque des revendications 1 à 6, caractérisé par le fait que la feuille (4) n'occupe qu'une partie déterminée de la pièce.

10. Procédé selon la revendication 9, caractérisé par le fait que la feuille (4) est préalablement mise dans la forme qu'elle doit occuper dans le moule.

11. Procédé selon l'une quelconque des revendications 9 et 10, caractérisé par le fait que la feuille (4) est placée avant l'injection dans une cavité de forme correspondante réalisée dans le moule.

12. Procédé selon l'une quelconque des revendications 9 et 11, caractérisé par le fait que la feuille est maintenue lors de l'injection de la matière thermoplastique par de légers picots solidaires du moule.

13. Procédé selon l'une des revendications 9 et 11, caractérisé par le fait que la feuille est maintenue lors de l'injection de la matière thermoplastique par un léger collage sur le moule.

14. Procédé selon l'une quelconque des revendications 9 et 11, caractérisé par le fait que la feuille est maintenue contre la surface du moule par de petits orifices à travers lesquels on provoque une succion.

15. Pièce composite obtenue par surmoulage d'au moins une feuille non rigide par injection de matière thermoplastique, caractérisée par le fait qu'elle comporte au moins une cavité réalisée par un gaz injecté sous pression pour terminer le processus d'injection de la matière thermoplastique.

## Claims

1. Process for overmoulding of nonrigid sheets placed in a mould by injecting a thermoplastic substance to produce composite articles, characterised in that after having placed the sheet (1,1a,1b,4) in the mould, a quantity of thermoplastic substance (2) is injected which is insufficient to fill the whole of the mould cavity but which is sufficient to cover the whole of the internal surface of the mould with a layer of the desired thickness; that a gas under pressure is injected simultaneously or successively into the thermoplastic substance which is still at least partially molten, driving the letter back over the whole surface of the mould by creating at least one cavity (3,3a,3b,3c,3d,3e) filled with the said gas; that the mould is cooled to bring the thermoplastic substance into the solid state; that the interior of the mould is disconnected from the source of gas under pressure; and that the mould is opened to release the composite article thus obtained.

2. Process according to Claim 1, characterised in that the sheet (1) consists of a sheet obtained by weaving or knitting, or a sheet of nonwoven textile, optionally lined with a layer of flexible foam.

3. Process according to Claim 1, characterised in that the sheet consists of a film of synthetic material such as an extruded or calendered plastic film, or a sheet of plastic comprising a layer of flexible foam.

4. Process according to Claim 1, characterised in that the sheet consists of a natural material such as leather.

5. Process according to any one of Claims 1 to 4, characterised in that the sheet has been decorated beforehand, for example by printing.

6. Process according to any one of the preceding claims, characterised in that the sheet consists of the superposition of a number of different layers, either over its whole surface or over some parts of the latter.

7. Process according to any one of the preceding claims, characterised in that the sheet is clamped on its periphery between two parts forming the mould, the thermoplastic substance being injected on one side of the sheet.

8. Process according to any one of Claims 1 to 6, characterised in that two sheets (1,1a) are clamped between two parts of the mould and that the thermoplastic substance is injected between those two sheets to obtain an article coated with the sheets over its whole surface.

9. Process according to any one of Claims 1 to 6, characterised in that the sheet (4) occupies only a determined part of the article.

10. Process according to Claim 9, characterised in that the sheet (4) is previously placed in the shape which it is to occupy in the mould.

11. Process according to either of Claims 9 and 10, characterised in that before the injection the sheet (4) is placed in a cavity of corresponding shape produced in the mould.

12. Process according to either of Claims 9 and 11, characterised in that the sheet is held during the injection of the thermoplastic substance by lightweight spikes integrally attached to the mould.

13. Process according to one of Claims 9 and 11, characterised in that the shoot is held during the injection of the thermoplastic substance by a slight adhesive bonding to the mould.

14. Process according to either of Claims 9 and 11, characterised in that the sheet is held against the surface of the mould by small orifices through which a suction is applied.

15. Composite article obtained by overmoulding at least one nonrigid sheet by injecting a thermoplastic substance, characterised in that it comprises at least one cavity produced by a gas injected under pressure to terminate the process of injection of the thermoplastic substance.

## Patentansprüche

1. Verfahren zum Beschichten von in eine Form eingelegten nichtsteifen Blättern durch Spritzgießen eines thermoplastischen Materials, zur Bildung von Verbundteilen, dadurch **gekennzeichnet,** daß man, nachdem man das Blatt (1,1a,1b,4) in die Form eingelegt hat, eine Menge des thermoplastischen Materials einspritzt, die nicht ausreicht, den gesamten Formhohlraum zu füllen, aber ausreicht, die Gesamtheit der inneren Oberfläche der Form mit einer Schicht der gewünschten Dicke zu bedecken, daß man gleichzeitig oder anschließend in das noch wenigstens teilweise geschmolzene thermoplastische Material unter Druck ein Gas injiziert, das das Material unter Bildung wenigstens eines mit dem Gas gefüllten Hohlraums (3,3a,3b,3c,3d,3e) auf die gesamte Oberfläche der Form drückt, daß man die Form kühlt, um das thermoplastische Material in den festen Zustand zu überführen, daß man das Innere der Form von der Druckgasquelle trennt und daß man die Form öffnet, um das so erhaltene Verbundteil zu entformen.

2. Verfahren nach Anspruch 1, dadurch **gekennzeichnet,** daß das Blatt 1 ein gewebtes oder gewirktes Blatt oder ein nicht gewebtes Textilblatt ist, das gegebenenfalls mit einem Polster aus Weichschaum beschichtet ist.

3. Verfahren nach Anspruch 1, dadurch **gekennzeichnet,** daß das Blatt eine Folie aus synthetischem Material wie etwa eine extrudierte oder kalandrierte Kunststofffolie oder eine mit einem Weichschaumpolster versehene Kunststofffolie ist.

4. Verfahren nach Anspruch 1, dadurch **gekennzeichnet,** daß das Blatt aus einem natürlichen Material wie etwa Leder besteht.

5. Verfahren nach einem der Ansprüche 1 bis 4, dadurch **gekennzeichnet,** daß das Blatt zuvor beispielsweise durch Prägen verziert worden ist.

6. Verfahren nach einem der vorstehenden Ansprüche, dadurch **gekennzeichnet,** daß das Blatt durch die Überlagerung von mehreren verschiedenen Schichten, sei es auf der gesamten Oberfläche oder sei es auf bestimmten Teilen derselben, gebildet ist.

7. Verfahren nach einem der vorstehenden Ansprüche, dadurch **gekennzeichnet,** daß das Blatt an seinem Rand zwischen zwei die Form bildende Teile eingespannt ist und daß das thermoplastische Material von einer Seite des Blattes her eingespritzt wird.

8. Verfahren nach einem der Ansprüche 1 bis 6, dadurch **gekennzeichnet,** daß zwei Blätter (1, 1a) zwischen zwei Teilen der Form eingespannt sind und daß man das thermoplastische Material zwischen die beiden Blätter einspritzt, um ein Teil zu erhalten, das auf seiner gesamten Oberfläche von den Blättern umhüllt ist.

9. Verfahren nach einem der Ansprüche 1 bis 6, dadurch **gekennzeichnet,** daß das Blatt 4 nur einen bestimmten Bereich des Teils einnimmt.

10. Verfahren nach Anspruch 9, dadurch **gekennzeichnet,** daß das Blatt (4) zuvor in die Gestalt gebracht worden ist, die es in der Gießform einnehmen soll.

11. Verfahren nach Anspruch 9 oder 10, dadurch **gekennzeichnet,** daß das Blatt (4) vor dem Spritzgießen in einen entsprechenden Hohlraum eingelegt wird, der in der Gießform ausgebildet ist.

12. Verfahren nach Anspruch 9 oder 11, dadurch **gekennzeichnet,** daß das Blatt während der Einspritzung des thermoplastischen Materials durch an der Form ausgebildete kleine Nadeln gehalten wird.

13. Verfahren nach Anspruch 9 oder 11, dadurch **gekennzeichnet,** daß das Blatt während der Einspritzung des thermoplastischen Materials durch leichtes Ankleben an die Form gehalten wird.

14. Verfahren nach Anspruch 9 oder 11, dadurch **gekennzeichnet,** daß das Blatt an der Oberfläche der Gießform durch kleine Öffnungen gehalten wird. über die ein Sog ausgeübt wird.

15. Verbundteil, das durch Beschichten wenigstens eines nichtsteifen Blattes durch Einspritzen von thermoplastischem Material erhalten wurde, dadurch **gekennzeichnet,** daß es wenigstens einen Hohlraum aufweist, der durch ein Gas gebildet wurde, das unter Druck injiziert wurde, um den Einspritzprozeß des thermoplastischen Materials zu beenden.
